# FASCICULE DE BREVET EUROPEEN

(11) **EP 4 124 990 B1**
(45) Date de publication et mention de la délivrance du brevet: **10.12.2025**
(21) Numéro de dépôt: 22184618.1
(22) Date de dépôt: 13.07.2022
(51) Int. Cl.: G06K 7/00, G06K 7/015, G06K 7/10, G06Q 20/40, H04B 5/00

(54) **PROCEDE D'IDENTIFICATION NUMERIQUE AVEC COMMUNICATION ENTRE UN APPAREIL MOBILE ET UN DOCUMENT D'IDENTITE**
DIGITALES IDENTIFIZIERUNGSVERFAHREN MIT KOMMUNIKATION ZWISCHEN EINEM MOBILEN GERÄT UND EINEM IDENTITÄTSDOKUMENT
DIGITAL IDENTIFICATION METHOD WITH COMMUNICATION BETWEEN A MOBILE DEVICE AND AN IDENTITY DOCUMENT

(30) Priorité: 27.07.2021 FR 2108140
(43) Date de publication de la demande: 01.02.2023
(73) Titulaire: Imprimerie Nationale, 75116 Paris (FR)
(72) Inventeur: EL GUERROUJE, Rayane, 78140 VELIZY-VILLACOUBLAY (FR); MALBOROUGT, Jean-Noël, 78140 VELIZY-VILLACOUBLAY (FR)
(74) Mandataire: Brun, Philippe Alexandre Georges

(56) Documents cités:
- EP-A1- 2 797 025
- EP-A1- 3 951 641
- WO-A1-2020/202770
- US-A1- 2014 080 411
- US-A1- 2020 302 128

## Description

### Domaine technique

La présente invention concerne le domaine d'identification numérique via la communication entre un document d'identité à puce électronique et un appareil mobile avec une antenne NFC.

### Technique antérieure

Dans un contexte de démocratisation de l'identité numérique, l'utilisation des documents d'identité comprenant une puce électronique pour s'identifier par le grand public présente un fort potentiel de développement. En effet, les puces électroniques intégrées dans le document d'identité contiennent des données personnelles de l'utilisateur qui peuvent être lues par des modules électroniques dédiés pour réaliser l'identification de la personne. Les appareils mobiles, de type téléphone portable par exemple, contiennent généralement des modules électroniques intégrés dans un système sur puce (SoC) qui sont aptes à lire les données d'identification émises par la puce électronique du document d'identité comme le suggèrent les documents US2020/302128A1 et US2014/080411A1.

Il est possible pour réaliser cette opération d'identification d'utiliser d'une part une puce de radio-identification (RFID pour *radio frequency identification en anglais)* intégrée au document d'identité et d'autre part un module de lecture de type communication en champ proche (NFC pour *Near Field Communication en anglais).*

Les puces RFID sont communément utilisées pour l'identification en mettant en œuvre une méthode pour mémoriser et récupérer des données à distance en utilisant des marqueurs appelés « radio-étiquettes » *(« RFID tag* » en anglais). Les puces RFID des documents d'identité contiennent un identifiant de communication et d'autres données utiles telles que le nom, le prénom, la date de naissance, l'adresse etc.

Dans la suite de la description, on désigne sous l'expression «document d'identité» tout support contenant des données personnelles, biométriques, pouvant identifier et authentifier une personne, une carte d'identité CNI, un passeport ou tout autre support contenant des données personnelles. Une personne représente un individu ou un utilisateur qui doit être authentifié pour accéder à un service.

La technologie NFC présente trois modes de fonctionnement différents :
- *Mode émulateur :* le téléphone portable se comporte comme une carte à puce sans contact destinée à être lue par un terminal NFC et utilise la carte SIM pour stocker des informations. Il s'agit d'un mode passif où l'antenne NFC intégrée dans un appareil mobile n'émet pas de champ magnétique. Le problème de portée spatiale de l'antenne NFC de l'appareil mobile ne se pose pas.
- *Mode lecteur :* le module NFC de l'appareil mobile joue le rôle d'un lecteur face à une puce de type RFID. La lecture se réalise par émission d'un champ magnétique décrivant une portée de lecture limitée dans l'espace.
- *Mode pair à pair* (peer-to-peer en Anglais) : le module NFC de l'appareil mobile échange des informations en lecture et en écriture avec un autre module NFC intégré dans un autre terminal mis en face à face.

Les circuits de lecture ou antennes de type NFC présentent une technologie de communication sans fil à courte portée et à haute fréquence, permettant l'échange d'informations entre des périphériques jusqu'à une distance d'environ 10 cm dans le cas d'utilisation d'une bande haute fréquence. Les modules NFC sont largement utilisés dans les appareils de téléphonie mobiles accessibles au grand public. De plus, les modules NFC sont aptes à lire les puces électronique RFID lorsque les modules NFC fonctionnent en « mode lecteur ». D'où l'intérêt de l'utilisation des modules NFC embarqués dans les téléphones portables pour effectuer des tâches d'identification numérique et de vérification d'identité de plus en plus requises. En effet, la lecture des puces électroniques des documents d'identité par des appareils de téléphonie portables permet un accès universel à ce type d'identification numérique. Elle est par exemple utilisée pour l'authentification d'une personne sollicitant un service auprès d'un établissement bancaire, souhaitant réaliser une transaction financière, l'accès à un service administratif personnel en ligne ou pour toute autre action requérant l'authentification d'un utilisateur.

L'inconvénient des antennes NFC des circuits intégrés implémentés dans les appareils mobiles consiste en ce que la portée spatiale de lecture est étroite pour le « mode lecture ».

De plus, il n'y a pas de normes qui définissent une position d'implémentation standardisée des antennes NFC dans les architectures de cartes électroniques des téléphones portables. Il existe des processus industriels, tel que le suggère le document WO2020/202770A1, selon lequel il est possible de robotiser une multitude de déplacements relatifs entre une antenne et une puce RFID pour déterminer avec précision une position relative de ces dernières pour établir une communication sans contact. Un tel enseignement technique n'est pas transposable dans un contexte d'application selon lequel un humain doit rechercher « à l'aveugle » un positionnement opportun d'une puce RFID véhiculée par document d'identité au regard de module NFC compris dans un appareil mobile dont il ignore les agencements respectifs.

Il existe donc un besoin d'optimiser le positionnement pour les échanges de données d'identification entre un appareil mobile comprenant un module NFC ayant une antenne NFC et un document d'identité muni d'une puce RFID.

### Exposé de l'invention

La présente invention vise à remédier au moins en partie à ce besoin.

Plus particulièrement, la présente invention a pour objectif de faciliter le guidage d'une position d'un appareil mobile par rapport à un document d'identité pour améliorer les échanges de données d'identification.

Pour cela un premier objet de l'invention concerne un procédé selon la revendication 1, ledit procédé étant un procédé d'identification numérique avec communication entre un appareil mobile apte à mettre en œuvre une application mobile et un document d'identité d'un utilisateur, ledit appareil mobile ayant au moins une antenne NFC, des moyens de stockage de données et une interface utilisateur, ledit document d'identité ayant une puce RFID comprenant des données d'identification. Ledit procédé comprend :
i. une étape de demande d'identification de l'utilisateur par l'application mobile ;
ii. une étape d'indication à l'utilisateur via l'interface utilisateur d'une position de travail entre l'appareil mobile et le document d'identité pour un échange optimal de données d'identification entre la puce RFID et l'antenne NFC ;
iii. une étape d'échange de données d'identification entre l'appareil mobile et le document d'identité.

Dans ce procédé de communication, l'utilisateur est guidé via l'appareil mobile pour placer correctement le document d'identité, respectivement le téléphone mobile, dans une position de travail permettant l'opération d'identification. Par « position de travail », on entend un positionnement de la puce électronique RFID par rapport à l'antenne NFC du téléphone portable permettant un échange de données optimal entre ladite puce et l'antenne en vue de réaliser l'identification. Par ce guidage de l'opérateur, un gain de temps est obtenu rendant l'opération d'identification numérique plus fluide et plus pratique pour l'utilisateur.

Afin de faciliter le guidage de l'utilisateur d'une manière interactive pour une expérience d'utilisation lors de l'identification numérique plus fluide et plus simple, le procédé comprend en outre une étape d'apprentissage pour la détermination de la position de travail, préalablement à l'étape d'indication de ladite position de travail. Ladite étape d'apprentissage comprend :
i'. une sous-étape d'indication par l'interface utilisateur d'un message d'instruction pour que ce dernier déplace le document d'identité par rapport à l'appareil mobile selon une direction indiquée ;
ii'. une sous-étape de détection d'une position de travail préliminaire dans laquelle la puce RFID est apte à échanger des données avec l'antenne NFC ;
iii'. une sous-étape d'indication de la position de travail préliminaire par retour graphique et/ou sonore et/ou haptique ;
iv'. une étape d'enregistrement de la position de travail préliminaire dans les moyens de stockage de données ;
v'. réitérer les sous-étapes i' à iv' N fois pour d'autres déplacements, avec N un entier naturel non nul, pour obtenir un échantillon de N positions de travail préliminaires ;
vi'. une sous-étape de calcul de la position de travail à partir de l'échantillon de N positions de travail préliminaires, ladite sous-étape de calcul correspondant à un calcul d'une moyenne des positions de travail préliminaires de l'échantillon de N positions de travail préliminaires.

Dans un premier mode de réalisation particulier, la position de travail est stockée dans l'appareil mobile.

Dans un deuxième mode de réalisation particulier, la position de travail est envoyée à un serveur informatique externe sous la forme d'une requête d'information de la position de travail de l'antenne NFC contenant la référence de l'appareil mobile pour compléter une base de données de positions de travail d'antennes. Ainsi, les résultats de différents apprentissages réalisés par plusieurs utilisateurs différents de plusieurs modèles d'appareils mobiles différents sont transférés, stockés et traités dans un serveur externe sécurisé. Cela permettra de constituer une base de données collaborative des positions de travail d'antennes NFC pour différentes références d'appareils mobiles. La combinaison des opérations d'apprentissage et de centralisation permettent de résoudre le problème d'hétérogénéité des positions de travail des antennes NFC selon le modèle et d'améliorer l'expérience de l'utilisateur lors d'une opération d'identification numérique où l'antenne NFC de l'appareil portable lit un document d'identité à puce RFID.

Un autre objet de l'invention concerne un appareil mobile comprenant :
- une antenne NFC ;
- une interface utilisateur ;
- des moyens de stockage de données ;
- des moyens de traitement des données ledit appareil mobile étant configuré pour mettre en œuvre les étapes du procédé selon l'invention.

Dans un mode de réalisation particulier, l'antenne NFC est apte à communiquer avec une puce RFID HF adaptée pour émettre selon une longueur d'onde de 13,56 MHz.

Un autre objet de l'invention concerne une application mobile d'identification sous la forme d'un programme d'ordinateur comprenant des instructions qui, lorsque ladite application est exécutée par un appareil mobile selon l'invention, conduisent ledit appareil mobile à mettre en œuvre le procédé d'identification numérique selon l'invention.

### Brève Description des Dessins

D'autres caractéristiques et avantages de la présente invention apparaîtront mieux à la lecture de la description qui suit en relation aux dessins annexés suivants :
- la figure 1 illustre un document d'identité à puce électronique et une vue de face et de derrière d'un exemple d'appareil mobile comprenant une antenne NFC,
- la figure 2 illustre les étapes du procédé d'identification numérique guidée selon l'invention,
- la figure 3a illustre les sous-étapes de l'apprentissage de l'appareil mobile selon l'invention,
- la figure 3b illustre le déplacement du document d'identité par rapport à l'appareil mobile lors de l'apprentissage de l'appareil mobile selon l'invention,
- la figure 3c illustre un exemple de l'indication de la position de travail par voie graphique lors du procédé d'identification numérique selon l'invention,
- la figure 4 illustre les sous-étapes de l'interrogation du serveur externe par l'appareil mobile selon l'invention,
- la figure 5 illustre l'écosystème collaboratif obtenu par la mise en œuvre des différents modes de réalisation du procédé selon l'invention.

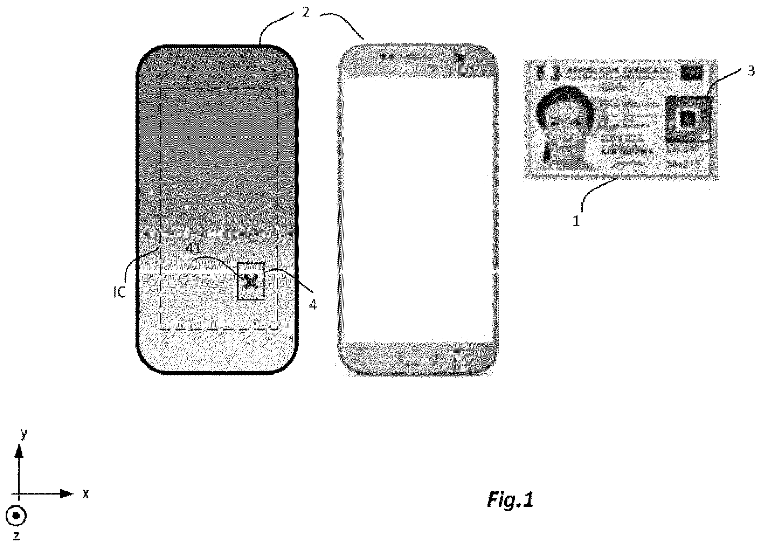

La figure 1 illustre un document d'identité à puce électronique et une vue de face et de derrière d'un exemple d'appareil mobile comprenant une antenne NFC.

Le document d'identité dans cet exemple est une carte d'identité 1 comprenant une puce électronique de type RFID 3. La puce électronique RFID 3 comprend un marqueur de type « radio-étiquettes » et contient des données personnelles de l'utilisateur tel que le nom, le prénom, la date de naissance, ou l'adresse. La puce électronique RFID 3 est destinée à être lue par une antenne NFC pour réaliser l'identification du porteur du document.

L'appareil mobile 2 dans l'exemple de la figure 1 est un téléphone de type smartphone. Il s'agit d'une illustration à titre d'exemple non limitatif car l'invention s'applique aussi pour d'autres types d'appareils mobiles tels que les tablettes et les montres connectées par exemple. On présente ici la vue de face de l'appareil mobile 2 comprenant au moins une interface homme-machine permettant de communiquer des informations par voie graphique via l'écran, ou sonore via un haut-parleur ou haptique via un vibreur. L'appareil mobile 2 comprend un circuit intégré comprenant au moins une antenne NFC 4 apte à lire une puce électronique de type RFID lorsque ladite puce électronique est alignée avec l'au moins antenne NFC 4 de manière à être couverte par le champ de lecture de l'antenne NFC 4 fonctionnant « en mode lecteur ». Ainsi, la position 41 d'une antenne NFC dans la surface du circuit intégré définit une position de travail lorsque la puce électronique à lire est placée en face et en alignement avec la position d'implémentation de l'antenne NFC 4. On entend par « placé en face » une position où l'axe orthogonal à la surface de la puce RFID coïncide avec l'axe orthogonal à la surface de l'antenne NFC 4. De plus, l'appareil mobile 2 comprend des moyens de traitement de données et des moyens de stockage de données destinés à mettre en œuvre des applications mobiles/informatiques et à traiter les données reçues lors d'une opération de lecture d'une puce RFID par au moins une antenne NFC 4.

Ainsi, pour chaque antenne NFC 4 de l'appareil mobile 2 on associe une position de travail 41 qui présente une première composante x₄₁ selon l'axe x et une seconde composante y₄₁ selon l'axe y tel que le plan (x,y) est un plan parallèle à la surface définie par le circuit intégré IC comprenant l'antenne NFC 4.

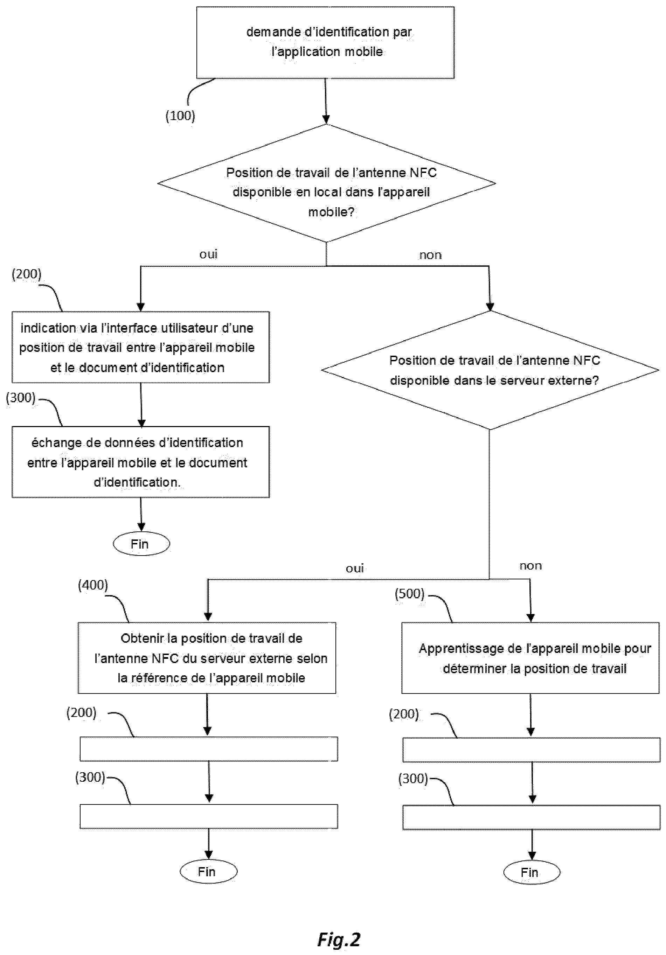

La figure 2 illustre les différentes étapes du procédé d'identification numérique guidée selon l'invention. Le déroulement du procédé dépend de la disponibilité ou non d'au moins une position de travail en local dans l'appareil mobile et/ou en externe dans un serveur informatique.

Lors de l'utilisation de l'appareil mobile pour accéder à un service en ligne, l'utilisateur doit s'identifier pour obtenir le service et/ou pour avoir accès à des données personnelles privées. Le procédé d'identification numérique peut être exécuté pendant la navigation dans le site internet du service (ou l'application du service) ou à travers le lancement d'une application informatique dédiée à l'identification numérique. De plus, le procédé selon l'invention peut être exécuté dans le contexte de l'enregistrement de l'utilisateur dans la base de données d'un système informatique. On cite à titre d'exemples non limitatifs, l'enregistrement pour la création d'un compte bancaire ou l'enregistrement dans une liste électorale, etc.

La première étape 100 du procédé d'identification numérique guidée consiste en la demande d'identification par l'application mobile. Ainsi, un message s'affiche à l'utilisateur sur l'écran de l'appareil mobile lui demandant de s'identifier en présentant son document d'identité à puce RFID pour qu'il soit lu par l'appareil mobile.

À ce stade d'exécution, le déroulement des étapes suivantes du procédé d'identification numérique guidée dépend de la disponibilité de l'information en local d'au moins une position de travail associé à la position d'implémentation d'une antenne NFC de l'appareil mobile. L'appareil mobile vérifie alors s'il existe au moins une position de travail d'une antenne NFC stockée dans une mémoire locale de l'appareil mobile. Deux scénarii différents sont prévus selon la disponibilité ou non de l'information en local.

On traite dans ce qui suit le cas où l'information est disponible en local dans une mémoire interne de l'appareil mobile.

L'application exécute l'étape suivante 200 d'indication via l'interface de l'appareil mobile d'une position de travail entre l'appareil mobile et le document d'identité. L'étape d'indication est réalisée par retour graphique et/ou sonore et/ou haptique. A titre d'exemple et sans perte de généralité, l'indication peut être réalisée via un message écrit sur l'écran, un pointeur sur l'écran indiquant la position de travail optimale, l'activation localisée d'un ensemble de pixels de l'écran, une vibration localisée ou tout autre moyen d'indications de ladite position de travail utilisant les différents canaux d'interaction et interfaces entre l'appareil mobile et l'utilisateur. L'utilisateur place ainsi le document d'identité par rapport à l'appareil mobile de manière à mettre la puce RFID dans la position de travail indiquée lors de l'étape précédente. L'étape suivante 300 consiste en la lecture des données d'identification par l'antenne NFC à partir de la puce RFID placée en face dans la position de travail à une distance réduite. On entend par « une distance réduite », une distance inférieure à 10 cm et de préférence une distance résultant de la mise en contact de la puce RFID avec la coque extérieure de la face arrière du téléphone.

Avantageusement, l'étape de lecture de données peut être complétée par un mécanisme de contrôle avec des clés cryptographiques pour contrôler la sureté des données échangées à partir de la puce RFID et respecter les normes de cybersécurité de l'opération d'identification numérique.

Une fois l'opération de lecture achevée, le procédé d'identification numérique est conclu.

On traite dans ce qui suit le cas où l'information n'est pas disponible en local dans une mémoire interne de l'appareil mobile.

Dans ce cas, l'appareil mobile interroge un serveur informatique externe SI dédié, pour chercher l'information de position de travail d'une antenne NFC implémentée dans le modèle de l'appareil mobile concerné. En effet, l'appareil mobile 2 est connecté à un serveur informatique SI ayant des moyens de stockage et de calcul de données. Les moyens de stockage comprennent au moins une base de données de positions d'implémentation d'antennes NFC. La base de données est classifiée selon des références de l'appareil mobile. Ainsi, pour chaque modèle d'appareil mobile disponible dans le marché, la base de données du serveur externe associe une référence et au moins une position de travail au sens de l'invention à chaque modèle d'appareil mobile compatible à la réalisation d'une opération d'identification numérique. Nous allons décrire dans une section ultérieure un exemple de constitution d'une telle base de données.

Deux possibilités se présentent alors en réponse à l'interrogation selon la disponibilité ou non de l'information d'au moins une position de travail dans la base de données.

On traite dans ce qui suit le cas où l'information est disponible en externe dans la base de données stockée dans le serveur informatique SI.

L'application exécute l'étape suivante 400 d'obtention de la position de travail de l'antenne NFC du serveur externe selon la référence de l'appareil mobile. La connexion entre le serveur informatique externe SI et l'appareil mobile peut être réalisée via un réseau adapté, tel qu'un réseau de communication 5G. Une fois transmise, l'information de position de travail associée au modèle de l'appareil mobile utilisé est indiquée à l'utilisateur au cours de l'étape 200 précédemment détaillée. Ensuite, l'étape 300 de lecture est exécutée par l'appareil mobile d'une manière similaire à ce qui a été précédemment détaillé.

On traite dans ce qui suit le cas où l'information n'est pas disponible ni en interne dans l'appareil mobile 2 ni en externe dans le serveur informatique SI.

Dans ce cas, une étape d'apprentissage 500 assisté est déclenchée par l'appareil mobile. L'application lance une interface ou une fenêtre d'apprentissage guidant l'utilisateur pour réaliser une séquence de sous-étapes formant l'étape d'apprentissage. L'étape d'apprentissage aboutit à la détermination d'au moins une position de travail associée à une antenne NFC 4 implémenté à l'intérieur de l'appareil mobile 2. L'étape d'apprentissage de l'appareil mobile est une étape interactive où l'utilisateur utilise son document d'identité pour déterminer la position de travail d'une antenne NFC dans son appareil mobile en suivant des instructions affichées sur l'écran de l'appareil. Le résultat de l'étape d'apprentissage 500 est ensuite stocké en interne dans l'appareil mobile et utilisé pour l'exécution successive des étapes d'indication 200 et de lecture 300 préalablement décrits.

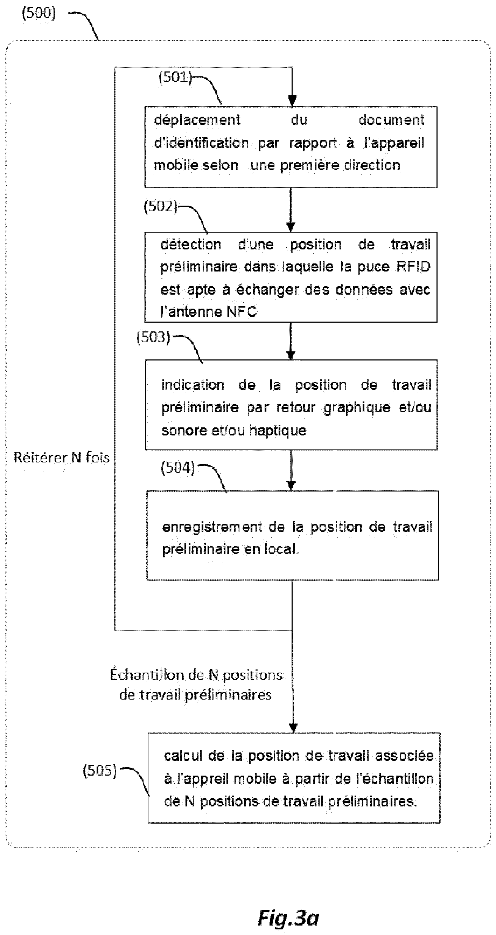

La figure 3a illustre les sous-étapes de l'étape d'apprentissage 500 de l'appareil mobile 2 compatible avec le procédé d'identification guidée selon l'invention.

L'étape d'apprentissage 500 est une étape interactive nécessitant la participation de l'utilisateur muni de son titre d'identité à puce RFID 3 tout en étant guidé par l'appareil mobile 2 à travers des instructions et des retours via divers canaux d'interaction.

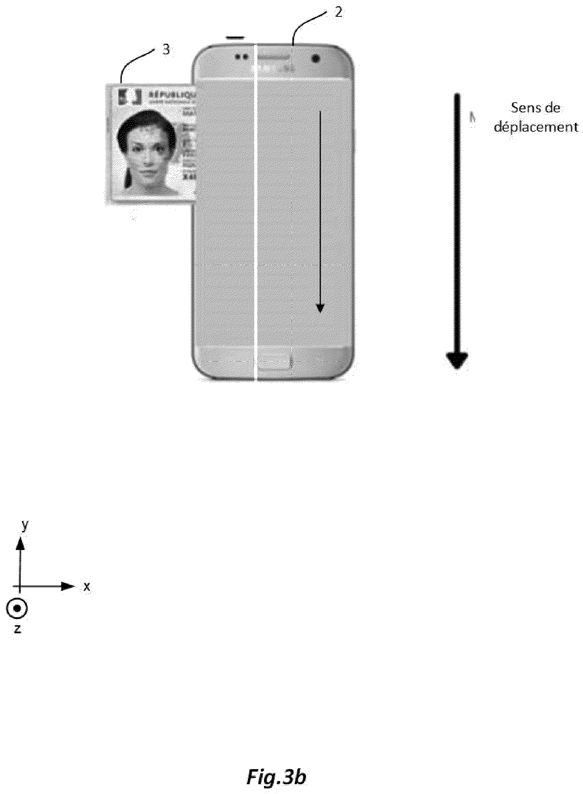

La première sous étape 501 de l'apprentissage consiste en le déplacement du document d'identité 1 par rapport à l'appareil mobile selon une première direction. On choisit à titre illustratif la direction selon l'axe y de la figure 1. Il est possible d'afficher un message d'instruction sur l'écran de l'appareil mobile indiquant le point de départ, le point d'arrivée, une courbe à suivre animée ou figée et toutes autres instructions utiles pour guider l'utilisateur à bien réaliser la sous-étape 501. Comme indiqué sur la figure 3b, il est préférable de placer le document d'identité du côté de la puce RFID 3 en contact avec la coque extérieure de la face arrière de l'appareil mobile 2 de manière à minimiser la distance orthogonale selon z entre la puce RFID 3 et l'antenne NFC 4. Ensuite, glisser le document d'identité 1 du haut vers le bas pour parcourir toute la surface de l'appareil mobile 2 et donc du circuit intégré IC.

La deuxième sous-étape 503 consiste en la détection d'une position de travail préliminaire dans laquelle la puce RFID 3 est apte à échanger des données avec l'antenne NFC 4 lors du déplacement du document d'identité 1 par rapport à l'appareil mobile pendant la sous-étape précédente. Cette détection se réalise lorsque la puce RFID est placée en face de l'antenne NFC et donc couverte par son champ de lecture. On rappelle qu'il s'agit ici d'une position de travail préliminaire et non la position de travail optimale.

Suite à cette détection, l'application exécute la troisième sous-étape 503 d'indication à l'utilisateur de la détection d'une position de travail préliminaire. L'indication de la détection d'une position de travail préliminaire peut être par retour graphique en indiquant un message écrit sur l'écran. Avantageusement, l'indication de la détection d'une position de travail préliminaire peut être réalisée par l'apparition d'un pointeur indiquant ladite position sur l'écran. Avantageusement, l'indication de la détection d'une position de travail préliminaire peut être réalisée par un retour sonore au moment du passage de la puce par la position de travail préliminaire pendant l'étape de déplacement 501. Avantageusement, l'indication de la détection d'une position de travail préliminaire peut être réalisée par un retour haptique (vibration globale ou localisée) au moment du passage de la puce par la position de travail préliminaire pendant l'étape de déplacement 501.

Ensuite, l'application exécute la quatrième sous-étape 504 consistant à l'enregistrement de la composante selon la direction choisie d'une première position de travail préliminaire dans une mémoire interne de l'appareil mobile 2.

Pour consolider les résultats de l'étape d'apprentissage, l'utilisateur doit répéter les sous-étapes 501 à 504 pour N itérations avec N un entier positif supérieur à 2. Préférentiellement, le nombre d'itérations N est choisi supérieur ou égal à 3.

Avantageusement, l'utilisateur est ensuite invité par l'application à exécuter les sous-étapes 501 à 504 pour au moins une itération selon une seconde direction orthogonale à la première direction dans le plan (x,y) pour obtenir au moins une position de travail préliminaire selon l'axe x.

Il en résulte ainsi de N itérations des sous-étapes 501 à 504 un échantillon de N positions de travail préliminaire associées à la position d'implémentation d'une antenne NFC dans le circuit intégré IC. La cinquième étape 505 de l'apprentissage consiste au traitement mathématique de l'échantillon de positions de travail préliminaires pour calculer une position de travail résultante. Il s'agit à titre d'exemple de l'exclusion des positions préliminaires qui présentent un écart supérieur à un certain seuil par rapport au noyau de l'échantillon, et l'extraction de la position de travail résultante par un traitement statistique de type moyenne arithmétique, moyenne pondérée, moyenne quadratique à titre d'exemple.

Pour conclure, lorsque l'information de la position de travail de l'antenne NFC d'un appareil mobile 2 n'est pas disponible ni en local ni dans le serveur externe SI, l'étape d'apprentissage 500 selon l'invention permettra d'obtenir cette position de travail pour l'utiliser pendant le procédé d'identification numérique guidée selon l'invention.

Avantageusement, la position de travail résultante de l'apprentissage de l'appareil mobile 2 est stockée dans une mémoire locale dudit appareil pour un usage ultérieur pendant une opération d'identification numérique guidée.

Avantageusement, la position de travail résultante de l'apprentissage de l'appareil mobile 2 est envoyée au serveur informatique externe SI pour compléter la base de données de positions de travail des antennes NFC selon la référence de l'appareil mobile 2.

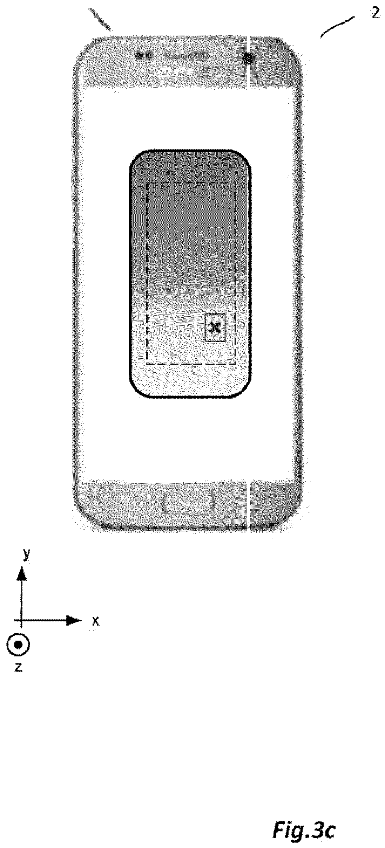

La figure 3c illustre un exemple de l'indication de la position de travail par voie graphique lors du procédé d'identification numérique selon l'invention. Dans cet exemple la face arrière de l'appareil mobile s'affiche sur l'écran (retour graphique) indiquant par un marqueur (la croix ici) la position de travail pour un procédé d'identification numérique selon l'invention.

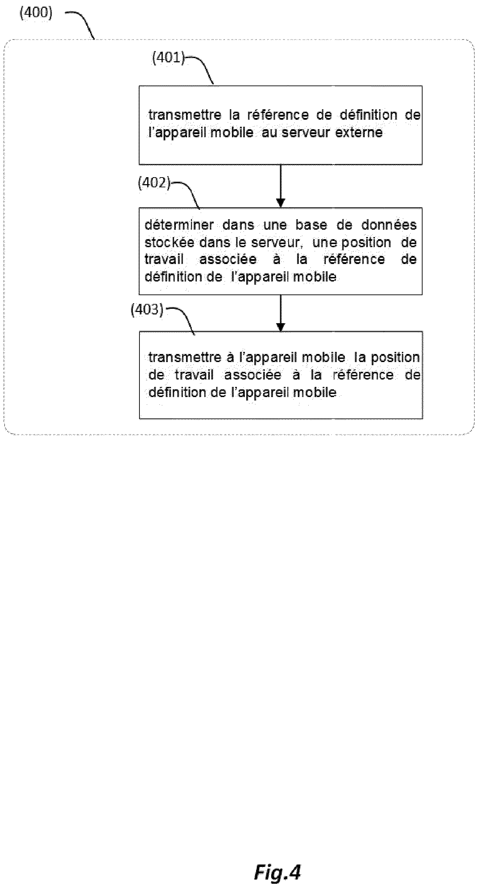

La figure 4 illustre les sous-étapes de l'étape 400 d'obtention la position de travail de l'antenne NFC du serveur externe selon la référence de l'appareil mobile.

La première sous-étape 401 est la transmission de l'appareil mobile 2 vers le serveur externe d'une requête d'information de la position de travail de l'antenne NFC contenant la référence de l'appareil mobile 2.

La deuxième sous-étape 402 est la détermination dans une base de données stockée dans le serveur, d'une position de travail associée à la référence de définition de l'appareil mobile. La référence de définition peut être le modèle et la marque de l'appareil mobile 2 ou le modèle et la marque du circuit intégré IC utilisé dans l'appareil mobile 2.

La troisième sous-étape est une dernière étape 403 correspondant à la transmission de la position de travail associée à la référence de l'appareil mobile, du serveur externe à l'appareil mobile.

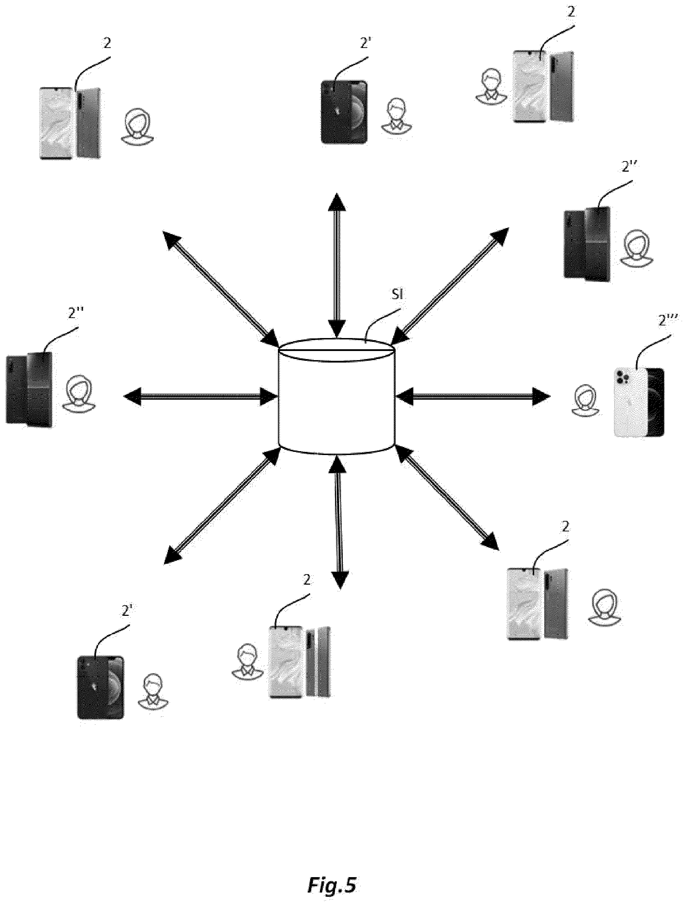

La figure 5 illustre l'écosystème collaboratif obtenu par la mise en œuvre des différents modes de réalisation du procédé selon l'invention. En effet, le serveur informatique externe SI dispose des moyens de stockage de données pour enregistrer la base de données. Le serveur informatique externe SI dispose en outre des moyens de traitements de données pour consolider les valeurs des positions de travail à partir des positions de travail résultantes de l'apprentissage reçues des différents appareils mobiles mettant en œuvre le procédé selon l'invention. Le serveur informatique externe SI dispose en outre des moyens de communication pour échanger avec les appareils mobiles mettant en œuvre le procédé selon l'invention dans deux sens : d'une part par l'envoi des positions de travail suite à une requête d'un appareil mobile et la réception des positions de travail résultantes de l'apprentissage d'un appareil mobile pour consolider la base de données.

Il est possible de demander à l'utilisateur lors de l'installation de l'application ou pendant une première utilisation du procédé d'exécuter l'étape d'apprentissage 500 d'une manière systématique. Cela permet d'envoyer la position résultante au serveur externe SI pour enrichir et consolider la base de données avec le maximum de positions de travail résultantes de l'apprentissage.

Il est possible de demander à l'utilisateur d'exécuter l'étape d'apprentissage 500 d'une manière régulière dans le temps (chaque année par exemple). Cela permet d'envoyer la position résultante au serveur externe SI pour la maintenance de la base de données avec le maximum de positions de travail résultantes de l'apprentissage.

Il en résulte que l'exécution du procédé d'identification guidée par une pluralité d'utilisateurs utilisant une pluralité de modèle d'appareil mobile permettra de créer un écosystème composé desdits utilisateurs et du serveur informatique externe SI qui interagit avec les différents appareils mobiles mettant en œuvre le procédé selon l'invention. L'échange d'informations de positions de travail des antennes NFC permet alors de créer, maintenir et mettre à jour une base de données centralisée et de faciliter, fluidifier et personnaliser l'expérience utilisateur lors d'une identification numérique.

## Revendications

1. Procédé d'identification numérique avec communication entre un appareil mobile (2) apte à mettre en œuvre une application mobile et un document d'identité (1) d'un utilisateur, ledit appareil mobile (2) ayant au moins une antenne NFC (4), des moyens de stockage de données et une interface utilisateur, ledit document d'identité (1) ayant une puce RFID (3) comprenant des données d'identification ; **caractérisé en ce que** ledit procédé est mis en œuvre par ledit appareil mobile et comprend :
i. une étape (100) de demande d'identification de l'utilisateur par l'application mobile ;
ii. une étape (200) d'indication à l'utilisateur via l'interface utilisateur d'une position de travail (41) entre l'appareil mobile (2) et le document d'identité (1) pour un échange de données d'identification entre la puce RFID (3) et l'antenne NFC (4) ;
iii. une étape (300) d'échange de données d'identification entre l'appareil mobile et le document d'identité ;
et dans lequel ledit procédé comprend une étape d'apprentissage (500) pour la détermination de la position de travail (41), préalablement à l'étape d'indication de ladite position de travail (41), ladite étape d'apprentissage (500) comprenant :
i'. une sous-étape (501) d'indication par l'interface utilisateur d'un message d'instruction pour que ce dernier déplace le document d'identité (1) par rapport à l'appareil mobile (2) selon une direction indiquée ;
ii'. une sous-étape (502) de détection d'une position de travail préliminaire dans laquelle la puce RFID (3) est apte à échanger des données avec l'antenne NFC (4) ;
iii'. une sous-étape (503) d'indication de la position de travail préliminaire par retour graphique et/ou sonore et/ou haptique ;
iv'. une étape (504) d'enregistrement de la position de travail préliminaire dans les moyens de stockage de données ;
v'. réitérer les sous-étapes i' à iv' N fois, avec N un entier naturel non nul, pour obtenir un échantillon de N positions de travail préliminaires ;
vi'. une sous-étape (505) de calcul de la position de travail (41) à partir de l'échantillon de N positions de travail préliminaires, et dans lequel la sous-étape de calcul (505) correspond à un calcul d'une moyenne des positions de travail préliminaires de l'échantillon de N positions de travail préliminaires.

2. Procédé d'identification numérique selon la revendication 1, dans lequel la position de travail (41) est stockée dans les moyens de stockage de données de l'appareil mobile (2).

3. Procédé d'identification numérique selon la revendication 1 ou 2, dans lequel la position de travail (41) est envoyée à un serveur informatique externe (SI) apte à être interrogé par l'appareil mobile (2) sous la forme d'une requête d'information de la position de travail de l'antenne NFC contenant la référence de l'appareil mobile (2) pour compléter une base de données de positions de travail d'antennes.

4. Appareil mobile comprenant :
∘ une antenne NFC (4) ;
∘ une interface utilisateur ;
∘ des moyens de stockage de données ;
∘ des moyens de traitement des données ;
ledit appareil mobile étant configuré pour mettre en œuvre toutes les étapes du procédé selon l'une quelconque des revendications 1 à 3.

5. Appareil mobile selon la revendication 4, dans lequel l'antenne NFC (4) est apte à communiquer avec une puce RFID HF adaptée pour émettre selon une longueur d'onde de 13,56 MHz.

6. Programme d'ordinateur comprenant des instructions qui, lorsque le programme d'ordinateur est exécuté par l'appareil mobile (2) selon l'une quelconque des revendications 4 ou 5, conduisent ledit appareil mobile (2) à mettre en œuvre le procédé d'identification selon l'une quelconque des revendications 1 à 3.

## Patentansprüche

1. Digitales Identifizierungsverfahren mit Kommunikation zwischen einem mobilen Gerät (2), das geeignet ist, eine mobile Anwendung durchzuführen, und einem Identitätsdokument (1) eines Benutzers, wobei das mobile Gerät (2) mindestens eine NFC-Antenne (4), Datenspeichermittel und eine Benutzerschnittstelle aufweist, wobei das Identitätsdokument (1) einen RFID-Chip (3), umfassend Identifizierungsdaten, aufweist; **dadurch gekennzeichnet, dass** das Verfahren durch das mobile Gerät durchgeführt wird und umfasst:
i. einen Schritt (100) zum Anfordern der Identifizierung des Benutzers durch die mobile Anwendung;
ii. einen Schritt (200) zum Anzeigen einer Arbeitsposition (41) zwischen dem mobilen Gerät (2) und dem Identitätsdokument (1) für einen Austausch von Identifizierungsdaten zwischen dem RFID-Chip (3) und der NFC-Antenne (4) gegenüber dem Benutzer über die Benutzerschnittstelle;
iii. einen Schritt (300) zum Austauschen von Identifizierungsdaten zwischen dem mobilen Gerät und dem Identitätsdokument;
und wobei das Verfahren einen Lernschritt (500) zum Bestimmen der Arbeitsposition (41) vor dem Schritt zum Anzeigen der Arbeitsposition (41) umfasst, der Lernschritt (500) umfassend:
i'. Unterschritt (501) zum Anzeigen durch die Benutzerschnittstelle einer Anweisungsnachricht , sodass diese das Identitätsdokument (1) relativ zu dem mobilen Gerät (2) in eine angezeigte Richtung bewegt;
ii'. einen Unterschritt (502) zum Erkennen einer vorläufigen Arbeitsposition, wobei der RFID-Chip (3) geeignet ist, Daten mit der NFC-Antenne (4) auszutauschen;
iii'. einen Unterschritt (503) zum Anzeigen der vorläufigen Arbeitsposition durch grafische und/oder akustische und/oder haptische Rückmeldung;
iv'. einen Schritt (504) zum Aufzeichnen der vorläufigen Arbeitsposition in den Datenspeichermitteln;
v'. Wiederholen der Unterschritte i' bis iv' N Mal, wobei N eine natürliche Zahl ungleich null ist, zum Erhalten einer Stichprobe von N vorläufigen Arbeitspositionen;
vi'. einen Unterschritt (505) zum Berechnen der Arbeitsposition (41) aus der Stichprobe von N vorläufigen Arbeitspositionen, und wobei der Berechnungsunterschritt (505) einer Berechnung eines Durchschnitts der vorläufigen Arbeitspositionen der Stichprobe von N vorläufigen Arbeitspositionen entspricht.

2. Digitales Identifizierungsverfahren nach Anspruch 1, wobei die Arbeitsposition (41) in den Datenspeichermitteln des mobilen Geräts (2) gespeichert wird.

3. Digitales Identifizierungsverfahren nach Anspruch 1 oder 2, wobei die Arbeitsposition (41) an einen externen Computerserver (SI) übermittelt wird, der geeignet ist, durch das mobile Gerät (2) in Form einer Anfrage von Informationen über die Arbeitsposition der NFC-Antenne, die die Referenz des mobilen Geräts (2) enthält, zum Vervollständigen einer Datenbank mit Arbeitspositionen von Antennen abgefragt zu werden.

4. Mobiles Gerät, umfassend:
∘ eine NFC-Antenne (4);
∘ eine Benutzerschnittstelle;
∘ Datenspeichermittel;
∘ Datenverarbeitungsmittel;
wobei das mobile Gerät zum Durchführen aller Schritte des Verfahrens nach einem der Ansprüche 1 bis 3 konfiguriert ist.

5. Mobiles Gerät nach Anspruch 4, wobei die NFC-Antenne (4) geeignet ist, mit einem HF-RFID-Chip zu kommunizieren, der zum Senden bei einer Wellenlänge von 13,56 MHz ausgelegt ist.

6. Computerprogramm, umfassend Anweisungen, die, wenn das Computerprogramm durch das mobile Gerät (2) nach einem der Ansprüche 4 oder 5 ausgeführt wird, das mobile Gerät (2) dazu veranlassen, das Identifizierungsverfahren nach einem der Ansprüche 1 bis 3 durchzuführen.

## Claims

1. Method of digital identification with communication between a mobile device (2) capable of implementing a mobile application and an identity document (1) of a user, said mobile device (2) having at least one NFC antenna (4), data storage means and a user interface, said identity document (1) having an RFID chip (3) comprising identification data; **characterized in that** said method is implemented by said mobile device and comprises:
i. a step (100) of requesting user identification by the mobile application;
ii. a step (200) of indicating to the user via the user interface, a working position (41) between the mobile device (2) and the identity document (1) for an exchange of identification data between the RFID chip (3) and the NFC antenna (4);
iii. a step (300) of exchanging identification data between the mobile device and the identity document;
and said method comprising a learning step (500) for determining the working position (41), prior to the step of indicating said working position (41), said learning step (500) comprising:
i'. a sub-step (501) of indicating, via the user interface, an instruction message for the user to move the identity document (1) relative to the mobile device (2) in an indicated direction;
ii'. a sub-step (502) of detecting a preliminary working position in which the RFID chip (3) is able to exchange data with the NFC antenna (4);
iii'. a sub-step (503) of indicating the preliminary working position by means of graphic and/or acoustic and/or haptic feedback;
iv'. a step (504) of recording the preliminary working position in the data storage means;
v'. repeating sub-steps i' to iv' N times, with N being a non-zero natural number, to obtain a sample of N preliminary working positions;
vi'. a sub-step (505) of calculating the working position (41) from the sample of N preliminary working positions, and the calculation sub-step (505) corresponding to a calculation of an average of the preliminary working positions of the sample of N preliminary working positions.

2. Digital identification method according to claim 1, wherein the working position (41) is stored in the data storage means of the mobile device (2).

3. Digital identification method according to claim 1 or 2, wherein the working position (41) is sent to an external computer server (SI) capable of being interrogated by the mobile device (2) in the form of a request for information on the working position of the NFC antenna containing the reference of the mobile device (2) to complete a database of antenna working positions.

4. Mobile device comprising:
∘ an NFC antenna (4);
∘ a user interface;
∘ data storage means;
∘ data processing means;
said mobile device being configured to implement all the steps of the method according to any of claims 1 to 3.

5. Mobile device according to claim 4, wherein the NFC antenna (4) is able to communicate with an HF RFID chip capable of transmitting at a wavelength of 13.56 MHz.

6. Computer program comprising instructions which, when the computer program is executed by the mobile device (2) according to one of claims 4 or 5, cause said mobile device (2) to implement the identification method according to one of claims 1 to 3.
